# EUROPEAN PATENT APPLICATION

(11) **EP 1 608 169 A1**
(43) Date of publication of application: **21.12.2005**
(21) Application number: 05252952.6
(22) Date of filing: 13.05.2005
(51) Int. Cl.: H04N 7/10, G11B 19/02, G11B 25/10, H04N 5/775, H04B 1/20

(54) **Multi function apparatus having scart connector and control method thereof**

(30) Priority: 18.06.2004 KR 2004045294
(71) Applicant: SAMSUNG ELECTRONICS CO., LTD., Suwon-si, Gyeonggi-do 442-742 (KR)
(72) Inventor: Na, Jae-hoon, c/o 704-1601, Salgugol 7danji Apt., Suwon-si, Gyeonggi-do (KR)
(74) Representative: Robinson, Ian Michael

(57) **Abstract**

A multi function apparatus (100) having a SCART (Syndicat des Constructeurs d'Appareils Radiorecepteurs et Televiseurs) connector (110) is configured so that a plurality of devices (200, 300) including first and second devices, each having an independent function, are combined therein, and includes a SCART connector (110) to which a signal for connection to an external device (500) is connected; and a selection unit (410) for transmitting a command sent through the SCART connector (110) to any of the first and second devices. Thus, an AV-Link may be applied to the multi function apparatus (100).

## Description

The present invention relates to a multi function apparatus having a SCART (Syndicat des Constructeurs d'Appareils Radiorecepteurs et Televiseurs) connector and its control method, and more particularly, to a multi function apparatus having a SCART connector so that an AV-Link may be applied to the apparatus, and its control method.

An AV-Link is a function that allows an AV device to be connected to external equipments via cables so that various commands may be sent to the AV device from the external equipments without requiring direct manipulation of the AV device, thereby giving convenience to a user.

An application of an AV device having an AV-link, is a TV which may directly issue an order to an AV device such that the AV device records audio and video information output through the TV.

Conventionally, an AV device is generally configured to have only one function, such as a DVD or VCD, so that the AV-Link may be easily applied as mentioned above.

A recent trend is a multi function apparatus having many devices combined, each device having an independent function. If an AV-Link is applied to the multi function apparatus in the same way as the former case, the multi function apparatus may not determine which device should operate according to a command sent from the external equipment. Thus, there have been limitations in applying an AV-Link to the multi function apparatus.

According to the present invention there is provided an apparatus and method as set forth in the appended claims. Preferred features of the invention will be apparent from the dependent claims, and the description which follows.

An aspect of the present invention provides a multi function apparatus having a SCART connector so that an AV-Link may be applied to the multifunction apparatus without problems. According to another aspect of the invention, there is provided a method of controlling the apparatus.

According to an aspect of the present invention, there is provided a multi function apparatus in which a plurality of devices including first and second devices, each having an independent function, are combined, which includes a SCART (Syndicat des Constructeurs d'Appareils Radiorecepteurs et Televiseurs) connector to which a signal for connection to an external device is connected; and a selection unit for transmitting an operation command sent through the SCART connector to any of the first and second devices.

According to another aspect of the present invention, preferably, but not necessarily, the operation command is transmitted through a tenth pin of the SCART connector.

According to another aspect of the present invention, the multi function apparatus may further include a menu-processing unit (440) forming GUI (Graphic User Interface) so as to select any device that is to receive the operation command by the selection unit.

In another aspect of the invention, there is also provided a method for controlling a multi function apparatus in which a plurality of devices including first and second devices, each having an independent function, are combined and in which a SCART connector to which a signal for connection to an external device is connected is provided, wherein the method includes receiving an operation command from the external device through the SCART connector; selecting one device between the first and second devices that is to be operated, and then transmitting the operation command to the selected device; and allowing the device receiving the operation command to conduct the operation.

According to another aspect of the present invention, preferably, but not necessarily, the selecting the device determines whether the first and second devices are in a prepared state, and then transmits the operation command to a device that is in a prepared state.

According to another aspect of the present invention, the operation command may be transmitted through a tenth pin of the SCART connector.

According to another aspect of the invention, the selected device is one between the first and second devices, set in GUI for the operation.

Additional aspects and/or advantages of the invention will be set forth in part in the description which follows and, in part, will be obvious from the description, or may be learned by practice of the invention.

These and/or other aspects and advantages of the present invention will be more apparent and more readily appreciated from the following description of the embodiments, taken in conjunction with the accompanying drawings of which:
Figure 1 is a block diagram showing a multi function apparatus having a VCR and a DVD;
Figure 2 is a block diagram showing a multi function apparatus having a SCART connector according to an aspect of the present invention connected to a monitor device; and
Figure 3 is a flowchart illustrating a control method of the multi function apparatus having a SCART connector according to an aspect of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

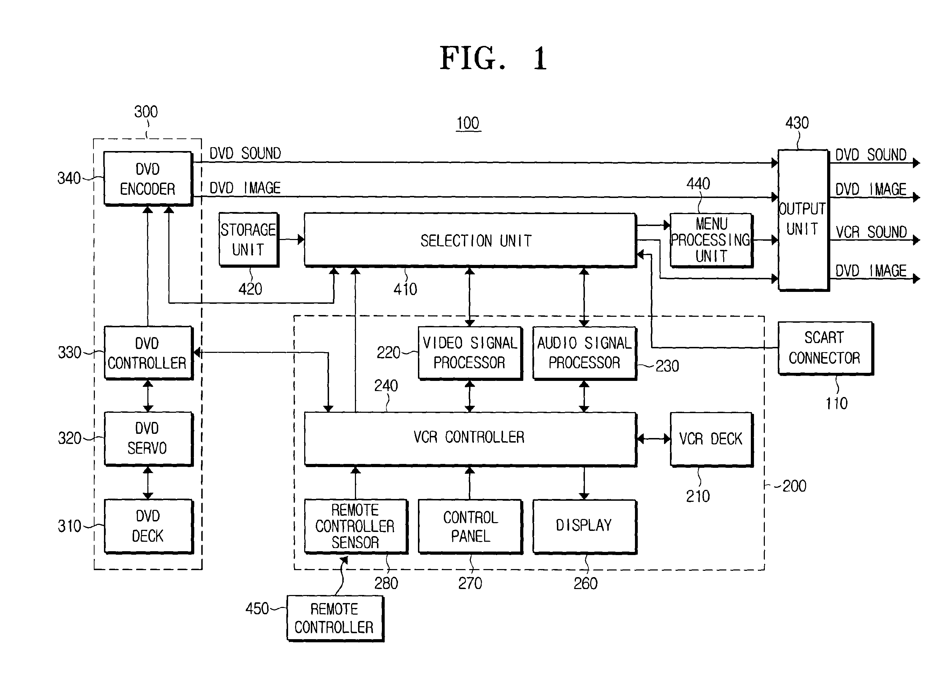

Figure 1 is a block diagram of a multi function apparatus having a VCR and a DVD, to which an aspect of the present invention is to be applied.

The multi function apparatus 100 is configured so that a plurality of devices including first and second devices, each performing an independent function, are combined therein. In this embodiment, the multi function apparatus 100 is provided with a VCR 200 and a DVD 300, as an example.

The multi function apparatus 100 includes a VCR 200, a DVD 300, a SCART connector 110, a selection unit 410, a storage unit 420, an output unit 430 and a menu-processing unit 440.

The VCR 200 includes a VCR deck 210, a video signal processor 220, an audio signal processor 230, a VCR controller 240, a display 260, a control panel 270, and a remote controller sensor 280.

The DVD 300 includes a DVD deck 310, a DVD servo 320, a DVD controller 330, and a DVD encoder 340.

Each element of the VCR 200 and the DVD 300 is well known in the art, and not described in detail here.

The SCART connector 110 transmits a signal from the outside to the selection unit 410, and the outside signal input through the SCART connector 110 may be a video signal, an audio signal, or a command signal.

The selection unit 410 receives an output from the DVD encoder 340, an output from the video and audio signal processors 220 and 230, and a signal from the SCART connector 110. The selection unit 410 selects the signal controlled by and input from the VCR controller 240 and the DVD controller 330, and an output of the selection unit 410 is sent to the menu processing unit 440 and the output unit 430.

In this embodiment, if an operation command is input from the SCART connector 110, the selection unit 410 is provided with device information from the storage unit 420 and transmits the device information to the VCR controller 240 or to the DVD controller 330.

The device information for only one of the VCR 200 and the DVD 300, which is to be operated, is stored in the storage unit 420 so that only one device is operated among a plurality of devices in the multi function apparatus. The device information stored in the storage unit 420 may be changed as desired by a user.

The output unit 430 receives signals from the DVD encoder 340, the selection unit 410 and the menu processing unit 440, and then outputs signals related to DVD image, DVD sound, VCR image and VCR sound.

The menu-processing unit 440 provides a menu having an OSD (On Screen Display) or a GUI (Graphic User Interface) function so that a user may easily recognize the signal input from the selection unit 410. In this embodiment, the menu provided by the menu-processing unit 440 has the GUI function so that the user may choose a device to be operated between the VCR 200 and the DVD 300.

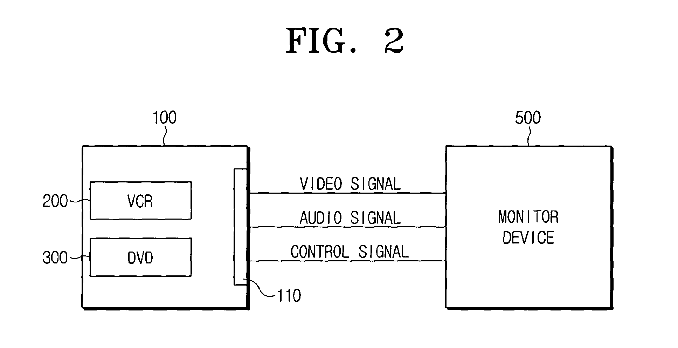

Figure 2 is a block diagram showing how the multi function apparatus having the SCART connector according to an aspect of the present invention is connected to a monitor device.

Generally, the multi function apparatus 100 through a GUI allows users to manipulate the apparatus more conveniently. According to one embodiment of the present invention, any of the VCR 200 and the DVD 300, which is basically selected to operate, is set as a default in the GUI, and the device set as a default will be operated when an operation command is sent thereto. A user may change the default device with the use of the GUI.

In an aspect of the present invention, the SCART connector 110 for transmitting a signal for connection to an external equipment such as the monitor device 500 is installed to the multi function apparatus 100, and the mutual communication between the multi function apparatus 100 and the monitor device 500 is ensured through the SCART connector 110.

As shown in Figure 2, the SCART connector 110 installed to the multi function apparatus 100 enables mutual transmission of video signals, audio signals and control signals between the multi function apparatus 100 and the monitor device 500.

The SCART connector 110 is also known as Pertitel connector or Euroconnetor, and is described in CENELEC EN 50 049-1:1989 standards or IEC 933-1 standards. Commonly, the SCART connector 110 is used for combining of audio and video connectors, and external devices such as the monitor device 500. These connectors and devices are connected through the SCART connector 110 and used for input or output of audio signals, video signals and control signals.

The signals transmitted to the SCART connector 110 may be changed according to the type of a monitor device 500 connected to the multi function apparatus 100 as shown in Tables 1 to 4.

Table 1 shows signals to be transmitted to the SCART connector in case of connection to RGB.

**Table 1**

| Output Connector | | Input Connector | |
|---|---|---|---|
| 1 | Audio right out | 2 | Audio right in |
| 3 | Audio left (or mono) out | 6 | Audio left (or mono) in |
| 4 | Audio return | 4 | Audio return |
| 7 | Blue out | 7 | Blue in |
| 5 | Blue return | 5 | Blue return |
| 11 | Green out | 11 | Green in |
| 9 | Green return | 9 | Green return |
| 15 | Red out | 15 | Red in |
| 13 | Red return | 13 | Red return |
| 16 | RGB status out | 16 | RGB status in |
| 14 | RGB status return | 14 | RGB status return |
| 19 | Sync (composite video) out | 20 | Sync (composite video) in |
| 17 | Sync return | 18 | Sync return |
| 21 | Shield | 21 | Shield |

Table 2 shows signals to be transmitted to the SCART connector in case of connection to S-Video.

**Table 2**

| Output Connector | | Input Connector | |
|---|---|---|---|
| 1 | Audio right out | 2 | Audio right in |
| 3 | Audio left (or mono) out | 6 | Audio left (or mono) in |
| 4 | Audio return | 4 | Audio return |
| 15 | Chrominance out | 15 | Chrominance in |
| 13 | Chrominance return | 13 | Chrominance return |
| 8 | Video status out | 8 | Video status in |
| 19 | Luminance out | 20 | Luminance in |
| 17 | Luminance return | 18 | Luminance return |
| 21 | Shield | 21 | Shield |

Table 3 shows signals to be transmitted to the SCART connector in case of connection to Composition Video.

**Table 3**

| Output Connector | | Input Connector | |
|---|---|---|---|
| 1 | Audio right out | 2 | Audio right in |
| 3 | Audio left (or mono) out | 6 | Audio left (or mono) in |
| 4 | Audio return | 4 | Audio return |
| 8 | Video status out | 8 | Video status in |
| 19 | Composite video out | 20 | Composite video in |
| 17 | Composite video return | 18 | Composite video return |
| 21 | Shield | 21 | Shield |

Table 4 shows signals to be transmitted to the SCART connector in case of connection to a Decoder.

**Table 4**

| Receiver Connector | | Decoder Connector | |
|---|---|---|---|
| 1 | Audio right out | 2 | Audio right in |
| 2 | Audio right in | 1 | Audio right out |
| 3 | Audio left out | 6 | Audio left in |
| 6 | Audio left in | 3 | Audi left out |
| 4 | Audio return | 4 | Audio return |
| 8 | Video status in | 8 | Video status out |
| 19 | Baseband out (scrambled) | 20 | Baseband in |
| 17 | Baseband out return | 18 | Baseband in return |
| 20 | Composite video in (unscramble) | 19 | Composite video out |
| 18 | Composite video in return | 17 | Composite video out return |
| 21 | Shield | 21 | Shield |

As seen in Tables 1 to 4, the SCART connector 110 is a 21-pin connector, and the tenth and twelfth pins are reserved pins, not used.

In this embodiment, an operation command for operating the multi function apparatus 100 is transmitted from the monitor device 500 to the multi function apparatus 100 through the tenth pin, which is a reserved pin, among 21 pins of the SCART connector 110.

If receiving the operation command from the monitor device 500 through the tenth pin of the SCART connector 110, the multi function apparatus 100 sends the operation command to one of the devices (VCR 200 or DVD 300) set as a default device in the GUI or to one device (VCR 200 or DVD 300) set in the GUI by a user so that the corresponding device is operated.

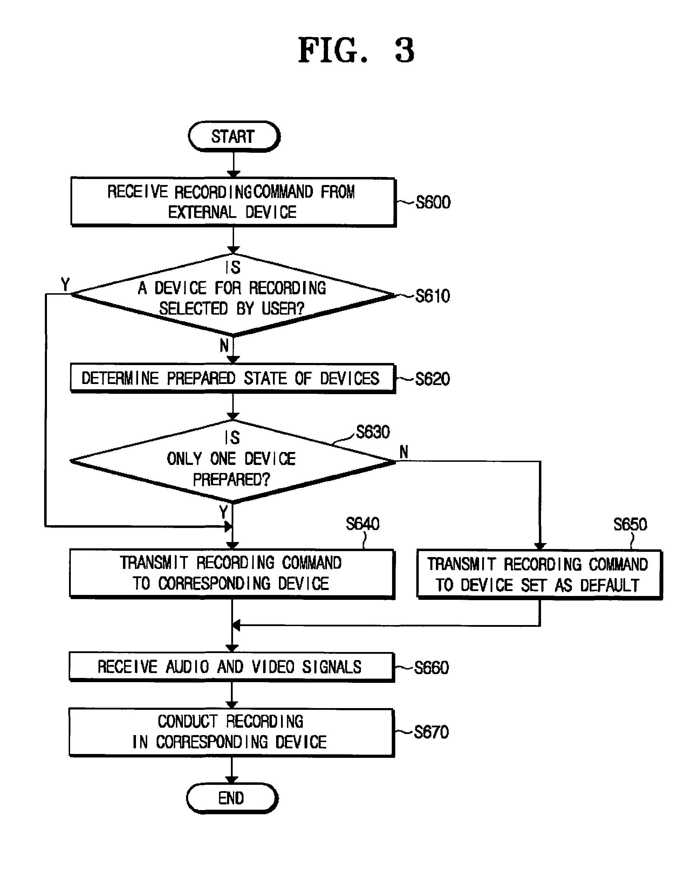

Figure 3 is a flowchart illustrating the method for controlling the multi function apparatus 100 having the SCART connector 110 according to an aspect of the present invention.

Here, the method for controlling the multi function apparatus 100 having the SCART connector 110 according to an aspect of the present invention is described with reference to Figures 2 and 3.

With the multi function apparatus 100 and the monitor device 500 being connected through the SCART connector 110, a user gives a recording command with the use of a manipulation key or a remote controller of the monitor device 500 in order to record the information provided by the monitor device 500 using the multi function apparatus 100, and then the recording command from the monitor device 500 is transmitted to the multi function apparatus 100 through the tenth pin of the SCART connector 110 (S600).

If receiving the recording command from the monitor device 500, the multi function apparatus determines whether there exists one device that is set in the GUI by a user to conduct the recording function (S610).

In operation S610, if there exists the device set in the GUI for recording, the recording command is transmitted to the device set in the GUI for recording (S640). If a device for recording is not set in the GUI by a user, it is determined whether the VCR 200 and the DVD 300 are in a prepared state for recording (5620).

If only one of the VCR 200 and the DVD 300 is prepared for recording (for example, if a storage medium such as DVD and CD is loaded on only one device), the recording command is transmitted to the prepared device (S630, 5640).

After that, audio and video signals are received through corresponding pins of the SCART connector 110 from the monitor device 500 (S660). The device receiving the audio and video signals then records the data (S670).

In operation S630, if both of the VCR 200 and the DVD 300 are prepared to record (for example, if DVD and CD are loaded on both devices respectively), the recording command is transmitted to one device that is set as a default in the GUI (S630, S650).

After that, the device set as a default in the GUI receives audio and video signals through corresponding pins of the SCART connector 110 from the monitor device 500 (S660), and the corresponding device then records the data (S670).

As mentioned above, in order to record the data from the monitor device 500 by using the multi function apparatus 100, the recording command is transferred to one device through the SCART connector 110 in Figure 3, so the device receiving the recording command conducts the recording function.

Here, though it is described that the recording command is transferred to the multi function apparatus 100 through the tenth pin of the SCART connector 110, the present invention is not limited to the case. For example, an operation command transferred to the multi function apparatus 100 through the SCART connector 110 may be changed according to the multi function apparatus 100, and may be one of regenerating command and recording command.

As described above, in the multi function apparatus having the SCART connector and its regenerating method, since the multi function apparatus in which a plurality of devices are combined and each device has an independent function, it is possible to distinguish which device should receive an operation command from an external device, so the AV-Link function may be applied to the multi function apparatus. In addition, a user may easily select through the GUI a device that will conduct the recording function.

The foregoing embodiment and advantages are merely exemplary and are not to be construed as limiting of the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multi function apparatus (100) in which a plurality of devices (200, 300) are combined, each device having an independent function, the apparatus comprising:
a SCART (Syndicat des Constructeurs d'Appareils Radiorecepteurs et Televiseurs) connector (110) to which a signal for connection to an external device (500) is connected; and
a selection unit (410) transmitting an operation command sent through the SCART connector (110) to any of the plurality of devices (200, 300).

2. The multi function apparatus (100) of claim 1, wherein the operation command is transmitted through a tenth pin of the SCART connector (110).

3. The multi function apparatus (100) of claim 1 or 2, further comprising a menu-processing unit (440) creating a GUI (Graphic User Interface) so as to select any of the plurality of devices (200, 300) that is to receive the operation command by the selection unit (410).

4. A method for controlling a multi function apparatus (100) in which a plurality of devices (200, 300) are combined, each device having an independent function, and in which a SCART (Syndicat des Constructeurs d'Appareils Radiorecepteurs et Televiseurs) connector (110) to which a signal for connection to an external device (500) is connected, the method comprising:
receiving an operation command from the external device (500) through the SCART connector (110);
selecting one of the plurality of devices (200, 300) between the plurality of devices (200, 300) that is to be operated, and then transmitting the operation command to the selected device; and
allowing the selected device receiving the operation command to conduct an operation.

5. The method of claim 4, wherein the selecting of the one device, comprises determining whether the plurality of devices (200, 300) are in a prepared state, and then transmitting the operation command to the device that is in the prepared state.

6. The method of claim 4 or 5, wherein the operation command is transmitted through a tenth pin of the SCART connector (110).

7. The method of claim 4, 5, or 6, wherein the selected device is one between the plurality of devices (200, 300), set in a GUI for the operation.

8. A multi function apparatus (100) having a plurality of devices (200, 300), each device having an independent function, the apparatus comprising:
a SCART (Syndicat des Constructeurs d'Appareils Radiorecepteurs et Televiseurs) connector (110) connected to the multi function apparatus (100), said SCART connector (110) receiving a connection signal for connecting to an external device (500); and
a selection unit (410) transmitting an operation command sent through the SCART connector (110) to any of the plurality of devices (200, 300).

9. The apparatus of claim 8, further comprising a storage unit (420) storing command information of the plurality of devices (200, 300).

10. The apparatus of claim 8 or 9, further comprising a menu-processing unit (440) generating a menu allowing a user to recognize the operation command transmitted from the selection unit (410).

11. The apparatus of claim 10, wherein the generated menu includes an OSD (On Screen Display) and a GUI (Graphic User Interface).

12. The apparatus of any of claims 8 to 11, wherein the operation command transmitted from the external device (500) to the multi function apparatus (100) is transmitted through a tenth pin of the SCART connector (110).

13. The apparatus of claim 12, wherein the operation command is transmitted to one of the plurality of devices (200, 300) set as a default device or to one of the plurality of devices (200, 300) selected by a user.

14. The apparatus of any of claims 8 to 13, wherein the SCART connector (110) enables mutual transmission of video signals, audio signals and control signals between the multi function apparatus (100) and the external device (500).

15. The apparatus of any of claims 8 to 14, wherein the selection unit (410) is provided with command information of the plurality of devices (200, 300).

16. A method of controlling a multi function apparatus (100) having a plurality of devices (200, 300), each device having an independent function and said multi function apparatus (100) connected to a SCART (Syndicat des Constructeurs d'Appareils Radiorecepteurs et Televiseurs) connector (110), said SCART connector (110) receiving a signal for connection to an external device (500), the method comprising:
receiving an operation command from the external device (500) through the SCART connector (110);
determining whether one of the plurality of devices (200, 300) is set as a default device and if determined that one of the plurality of devices (200, 300) is set as the default device transmitting the operation command to the default device; and
operating the default device.

17. The method of claim 16, wherein if determined that one of the plurality of devices (200, 300) is not set as the default device, determining a readiness state of the plurality of devices (200, 300) and selecting a ready device as the default device.

18. The method of claim 17, wherein the selected device receives the operation command.

19. The method of claim 16, 17 or 18, wherein the operation command transmitted from the external device (500) to the multi function apparatus (100) is transmitted through a tenth pin of the SCART connector (110).

20. The method of any of claims 16 to 19, wherein the SCART connector (110) enables mutual transmission of video signals, audio signals and control signals between the multi function apparatus (100) and the external device (500).
